# EUROPÄISCHE PATENTSCHRIFT

(11) **EP 2 301 849 B1**
(45) Veröffentlichungstag und Bekanntmachung des Hinweises auf die Patenterteilung: **07.11.2012**
(21) Anmeldenummer: 10010193.0
(22) Anmeldetag: 22.09.2010
(51) Int. Cl.: B65B 51/22, B29C 53/50, B29C 53/54, B65B 51/32

(54) **Schlauchbeutelmaschine zum Herstellen und Füllen von schlauchartigen Beuteln**
Tubular bag machine for producing and filling tubular bags
Ensacheuse destinée à fabriquer et remplir des sachets tubulaires

(30) Priorität: 25.09.2009 DE 202009012907 U
(43) Veröffentlichungstag der Anmeldung: 30.03.2011
(73) Patentinhaber: Hastamat Verpackungstechnik GmbH, 35633 Lahnau (DE)
(72) Erfinder: Haus, Rainer, 35444 Biebertal-Fellingshausen (DE); Ponkratz, Michael, 35576 Wetzlar (DE)
(74) Vertreter: Lempert, Jost

(56) Entgegenhaltungen:
- DE-B- 1 178 348
- US-A- 4 373 982
- US-B1- 6 599 389

## Beschreibung

Die Erfindung betrifft eine Schlauchbeutelmaschine nach dem Oberbegriff des Anspruchs 1.

Derartige Schlauchbeutelmaschinen dienen zum Herstellen und Füllen von schlauchartigen Beuteln, welche zur Verpackung von Produkten, insbesondere zur Verpackung von Lebensmitteln, verwendet werden. Schlauchbeutel als Verpackung sind variabel in ihren Einsatzmöglichkeiten sowohl in ökonomischer, als auch in ökologischer Sicht, da ein sparsamer Umgang mit dem Verpackungsmaterial gewährleistet ist.

Schlauchbeutelmaschinen sind aus dem Stand der Technik in unterschiedlichen Ausführungen bekannt. Im Allgemeinen werden Schlauchbeutelmaschinen dazu verwendet, aus einem flachen Verpackungsmaterial, insbesondere unter Verwendung einer unter Wärmeeintrag siegelbaren Folie aus Kunststoff, einen Beutel zu formen, welcher dann mit einem Füllgut, vorzugsweise einem Lebensmittel wie z.B. Reibekäse oder Salat, gefüllt werden kann. Hierzu wird bei der Herstellung von solchen Schlauchbeuteln eine Folie von Rollen abgezogen, über eine Formschulter um ein Formatrohr geleitet, und in einen Schlauch mit überlappenden Längskanten umgeformt. Der so gebildete Schlauch umschließt ein seiner Form angepasstes Füllrohr. Die überlappenden Kanten werden mittels einer Ultraschallsiegeleinrichtung zu einer Längsnaht verbunden und der Schlauch so längseitig geschlossen, wie dies aus der DE 10 2006 041 966 B3 bekannt ist. Bei dieser Druckschrift ist ein Amboss in das Füllrohr integriert, wobei der Amboss Führungsabschnitte aufweist, in denen die miteinander zu verschweißenden Längskanten der Folie geführt werden. Die Führungsabschnitte sind als Nuten ausgebildet, und derart in den Amboss eingebracht, dass sie sich überlappen. Hiermit werden die Längskanten der Folie vor der Schweißstelle innerhalb des Ambosses so geführt, dass sie an der Schweißstelle einander überlappend versiegelt werden.

Anschließend wird bei derartigen Schlauchbeutelmaschinen mit einer ersten Quersiegelung eine Bodennaht erzeugt. Wenn der Schlauchbeutel über das Füllrohr gefüllt wurde, erfolgt durch eine mit einer zweiten Quersiegelung hergestellten Kopfnaht ein Verschluss des Schlauchbeutels.

Nachteilig an derartigen Schlauchbeutelmaschinen ist, dass für eine dichte Packung auch spezielle Folien insbesondere mit vorgegebener Stärke notwendig sind, welche aus mehreren Schichten bestehen können und bei unterschiedlichen Folien oder Stücken jeweils eine Anpassung der Siegeleinrichtung und des Wärmeeintrags erfolgen muss. Je nach Beschaffenheit der Folien können diese allerdings in den Führungsabschnitten verknicken, Falten werfen oder noch vor der Siegeleinrichtung nicht parallel zueinander laufen, womit eine überlappende Führung der Kanten der Folie nicht mehr gegeben ist. Undichte Längsnähte sind die Folge. Insbesondere vermag die bekannte Ultraschall-Siegeleinrichtung dadurch keine dichten Längsnähte herzustellen.

Die US 6,599,389 B1 zeigt eine Ultraschallsiegelvorrichtung für Verpackungsmaterial. Bei dieser wird ein gurtähnlicher Film entlang einer Platte 15 bewegt und zu einem rechteckigen Querschnitt verformt, so dass der Film durch einen rohrförmigen Rahmen der Platte geformt wird. Ein Federelement mit einem aus diesem hervorstehenden Amboss 31 wird an der inneren Kante der Platte gehalten und ein Ultraschallhammer ist gegenüber dem Amboss angeordnet, so dass beide Seitenkanten des zu einem Schlauch geformten Films auf dem Amboss platziert werden, um durch Ultraschallschwingungen des Ultraschallhammers verschmolzen zu werden.

Der vorliegenden Erfindung liegt daher die Aufgabe zugrunde, eine Schlauchbeutelmaschine bereitzustellen, die insbesondere eine bessere Längssiegelung aufweist und dabei bei hohem Durchsatz zuverlässig Dichtigkeit erreicht.

Die genannte Aufgabe wird mit einer Schlauchbeutelmaschine der eingangs genannten Art gelöst, die die kennzeichnenden Merkmale des Anspruchs 1 aufweist.

In einer besonders bevorzugten Ausgestaltung ist die Ultraschall- oder US-Längssiegeleinrichtung mit einem Amboss und einer Sonotrode an einem Bügel am Formatrohr befestigt. Die US-Längssiegeleinrichtung ist so in das Formatrohr integriert, dass das Formatrohr eine längliche rechteckige Öffnung aufweist, in welcher der Amboss eingeschraubt ist. In einer bevorzugten Ausführungsform ist vorgesehen, dass der Amboss mindestens zwei vertikale Führungsabschnitte in Form von Führungsschlitzen aufweist, durch welche die Kanten des Verpackungsmaterials geführt sind, wobei ein erster, insbesondere innerer Führungsschlitz des Ambosses mit einem Schlitz zwischen Sonotrode und ein Gegenteil des Ambosses zur Sonotrode, insbesondere fluchtend mit dem äußeren Rand des Formatrohres ausgebildet ist und ein zweiter, äußerer Führungsschlitz des Ambosses eine in den Führungsabschnitt gewölbte Ausbuchtung aufweist, zur Führung einer zweiten Kante des Verpackungsmaterials.

Eine optimale Führung der Kanten des Verpackungsmaterials erfolgt dadurch, dass das Federleitblech im äußeren Führungsschlitz eingesteckt und mit einer Führungshülse um das Formatrohr verschraubt ist, wobei das Federleitblech die zweite Folienkante von einem zweiten Führungsschlitz in die Ebene des ersten Führungsschlitzes auf die erste Kante führt. Das Federleitblech ist aus einem länglich rechteckigen Blech ausgebildet, wobei ein unteres Drittel zu einer Schlaufe gebogen ist, so dass bei Belastung eine Federwirkung eintritt. Je nach Biegung der Schlaufe des Federleitbleches kann eine andere Federkraft auf die Folienkante gebracht werden. Das Federleitblech von einer Öffnung der Führungshülse bis unmittelbar vor die Sonotrode ausgebildet ist.

In einer besonders bevorzugten Ausführungsform ist vorgesehen, dass die Abzugseinrichtung eine Formschulter aufweist, wobei ein Verpackungsmaterial in die Abzugseinrichtung einzuspannen ist. Weiterhin ist vorgesehen, dass das Formatrohr unterhalb des Bügels und oberhalb der Ultraschall-Längssiegeleinrichtung eine umlaufende Führungshülse zur Führung des Verpackungsmaterial aufweist, wobei das Verpackungsmaterial durch die Führungshülse und das Federleitblech derart eng an das Formatrohr gehalten ist, das eine stabile und gleichbleibende Breite der Längssiegelnaht gewährleistet und ein Auseinanderlaufen der Kanten des Verpackungmaterials vermieden wird. Des Weiteren ist vorgesehen, dass die Längssiegeleinrichtung Blasdüsen zur Kühlung der Siegelnaht aufweist, womit die Dichtigkeit der Längssiegelnaht noch zusätzlich erhöht werden kann, da eine kühle Naht reißfester und somit belastbarer ist. Zur Steuerung der US-Längssiegeleinrichtung ist bevorzugt vorgesehen, dass der US-Längssiegeleinrichtung eine Steuerelektronik zugeordnet ist.

In einer besonders bevorzugten Ausführungsform ist vorgesehen, dass das Formatrohr eine innere Abdeckung zum Schutz des in das Formatrohr ragenden Ambosses aufweist, wobei die innere Abdeckung im Wesentlichen rohrförmig ausgebildet ist, wobei eine Seite eine nach innen rechteckig ausgeformte Ausbuchtung aufweist. Hiermit wird gewährleistet, dass durch das Formatrohr fallende Füllgut ungehindert den Amboss passieren kann, ohne dass Füllgut an demselbigen hängenbleiben und sich ansammeln kann. Des Weiteren kann die innere Abdeckung so ausgestaltet sein, dass seitlich des Ambosses Platz für weitere Funktionalitäten, wie z.B. elektrische Zuführungen, Einrichtungen zur Produktbegasung, Staubabsaugeinrichtungen o.ä., ist.

In einer bevorzugten Ausführungsform ist vorgesehen, dass der Quersiegeleinrichtung, die ebenfalls als Ultraschall-Siegeleinrichtung ausgebildet ist, eine Sonotrode und einen Amboss aufweist und ihr eine Steuerelektronik zugeordnet ist.

Durch die vorliegende Erfindung wird eine vereinfachte Schlauchbeutelmaschine mit einer Längssiegelung mit einer flachen überlappenden Siegelnaht mittels einer platzsparenden Ultraschalleinrichtung bereitgestellt. Eine optimale Bahnkantenführung der Folienkanten wird durch die Kombination der Führungsschlitze des Ambosses mit dem Federleitblech und insbesondere der Führungshülse um das Formatrohr gewährleistet. Ein Auseinanderlaufen der Folienkanten wird vollständig vermieden. Hiermit stellt die erfindungsgemäße Schlauchbeutelmaschine nicht nur sichere und dichtere Längssiegelungen her, sondern weist durch die kompakte Bauweise der US-Längssiegeleinrichtung auch eine verringerte Bauhöhe auf, was eine schnellere Verpackung durch eine geringere Fallhöhe der zu füllenden Produkte zur Folge hat.

Weitere Vorteile und Merkmale ergeben sich aus den Ansprüchen und aus der nachfolgenden Beschreibung, in der ein Ausführungsbeispiel der Erfindung unter Bezugnahme auf die Zeichnungen im Einzelnen erläutert ist. Hierbei zeigt:
- Fig. 1.: eine Perspektivansicht einer erfindungsgemäßen Schlauchbeutelmaschine mit einem Formatrohr, ei- ner Längssiegeleinrichtung sowie einer Quersie- geleinrichtung;
- Fig. 2.: eine vergrößerte Perspektiveinsicht der Längssie- geleinrichtung mit einem Federleitblech;
- Fig. 3.: einen Querschnitt durch die Längssiegeleinrich- tung nach Schnitt A-A der Fig. 4;
- Fig. 4.: eine vertikale Seitenansicht einer Längssiegel- einrichtung mit einem herausgebrochenen Teil im Formatrohr in Form eines vertikalen Längsschnit- tes im Bereich der Längssiegeleinrichtung;
- Fig. 5a.: ein erfindungsgemäßes Federleitblech in einer seitlichen Ansicht; und
- Fig. 5b.: das erfindungsgemäße Federleitblech in einer Vor- deransicht.

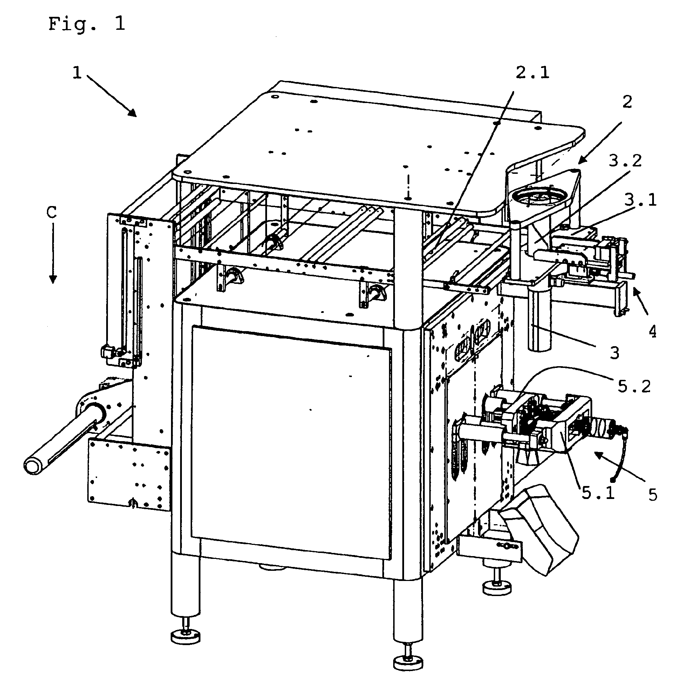

Fig. 1 zeigt eine erfindungsgemäße Schlauchbeutelmaschine 1. Sie umfasst eine Abzugseinrichtung 2 (nur teilweise dargestellt) für bahnförmiges Verpackungsmaterial, vorzugsweise eine Folie, ein Formatrohr 3 mit kreisförmigem Querschnitt und eine Ultraschall- bzw. US-Längssiegeleinrichtung 4 sowie eine Quersiegeleinrichtung 5. Die Förderrichtung folgt einem Pfeil C von oben nach unten.

Die Abzugseinrichtung 2 weist eine Folieneinheit 2.1, welche die Folie lagert und zuführt, sowie eine am Formatrohr 3 fixierte Formschulter (nicht dargestellt) auf, über welcher die Folie zu einem Schlauch um das Formatrohr 3 formund ziehbar wird. Die Formschulter weist in an sich bekannter Weise ein der zugeführten Folie zugewandtes Schulterblatt mit einem im Wesentlichen ebenen horizontalen Einlaufbereich auf und umschließt in Förderrichtung der Folie mit abwärts gerichteten Schenkeln ein Einfüllrohr der Maschine für Füllgut, bis sie dieses als einseitig geschulterte Hülse umgibt. Des Weiteren weist die Abzugseinrichtung 2 eine Vorschubeinrichtung (nicht dargestellt) auf, um den Folienschlauch weiterzuführen. Die Vorschubeinrichtung ist hierbei motorisch antreibbar.

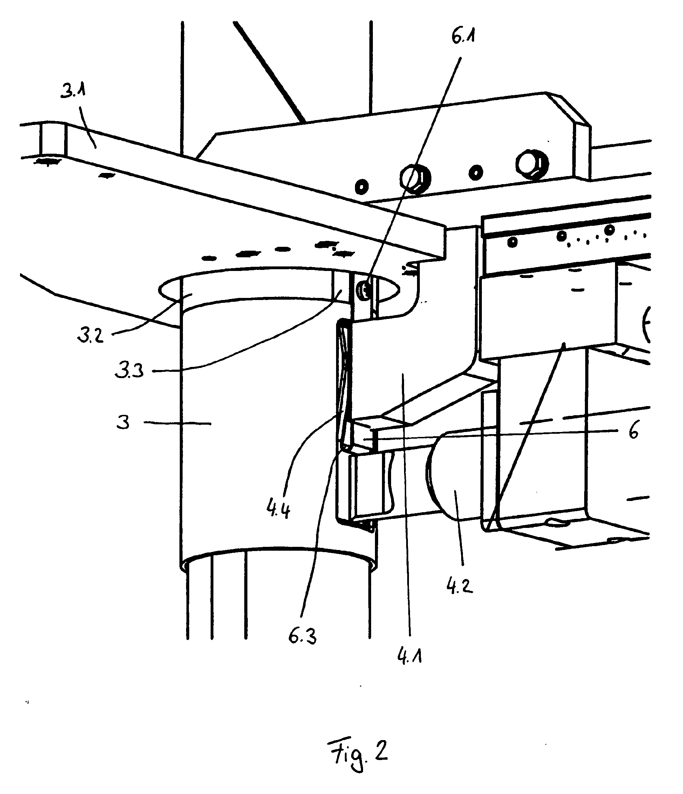

Die Fig. 2 zeigt eine Perspektivansicht der erfindungsgemäßen Schlauchbeutelmaschine 1 im Bereich der Längssiegeleinrichtung 4. Die Ultraschall-Längssiegeleinrichtung 4 (US-Längssiegeleinrichtung) ist an einem indirekt mit dem Formatrohr 3 verbunden und dieses mit radialem Abstand umgebenden Bügel 3.1 befestigt. Um das Formatrohr 3 ist weiterhin eine Führungshülse 3.2 ausgebildet, die unmittelbar unter dem Bügel 3.1 beginnt und sich nach unten bis unterhalb einer Sonotrode 4.2 erstreckt. Die Führungshülse legt die Folie eng um das Formatrohr 3 und führt sie unter ein nachfolgendes Federleitblech zu sowie unter diesem überlappend bis zu der Sonotrode 4.2. Die Führungshülse 3.2 ist im Wesentlichen rohrförmig ausgebildet und weist an der der US-Längssiegeleinrichtung 4 zugewandten Seite eine seitliche Öffnung 3.3 auf.

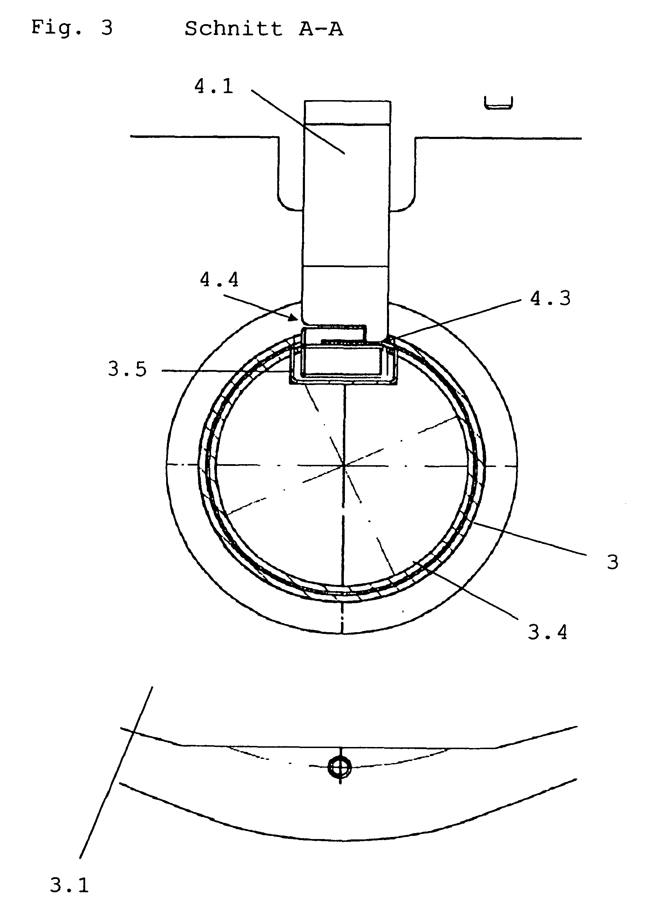

Zwischen Führungshülse 3.2 und Formatrohr 3 ist ein rohrförmiger Zwischenraum 3.2.1 für die Folie gegeben. Die US-Längssiegeleinrichtung 4 ist an dem Bügel 3.1 befestigt, welche neben einem Amboss 4.1 eine Sonotrode 4.2 aufweist. Der Amboss 4.1 ist, ausgehend von der Befestigung an dem Bügel 3.1, L-förmig in Richtung des Formatrohres 3 ausgebildet, wobei ein nach unten länglich ausgebildetes Gegenteil 4.1.1 des Ambosses 4.1 zur Sonotrode 4.2 in den Innenraum des Formatrohres 3 hineinragt. Der Amboss 4.1 weist in seinem Querschnitt eine rechteckige Form auf, wie in Fig. 3 dargestellt. Der Amboss 4.1 hat zwei vertikale Führungsabschnitte in Form von Führungsschlitzen, wobei ein erster, insbesondere innerer Führungsschlitz 4.3 des Ambosses 4.1 mit einem Schlitz zwischen Sonotrode 4.2 und einem Gegenteil des Ambosses 4.1 zur Sonotrode 4.2 fluchtend mit dem äußeren Rand des Formatrohrs 3 ausgebildet ist. Ein zweiter, insbesondere äußerer Führungsschlitz 4.4 ist in einem bestimmten Abstand in einer parallelen Ebene zu dem Führungsschlitz 4.3 ausgebildet. Die Führungsschlitze 4.3, 4.4 erstrecken sich in etwa über zwei Drittel der Breite des Ambosses, so dass sie sich über etwas mehr als einem Drittel der Breite des Ambosses 4.1 überlappen. Dies bedeutet, dass sich auch die Längskanten der um das Formatrohr 3 gelegten Folie entsprechend überlappen. Die Kanten der Folie sind durch diese Führungsschlitze 4.3, 4.4 führbar.

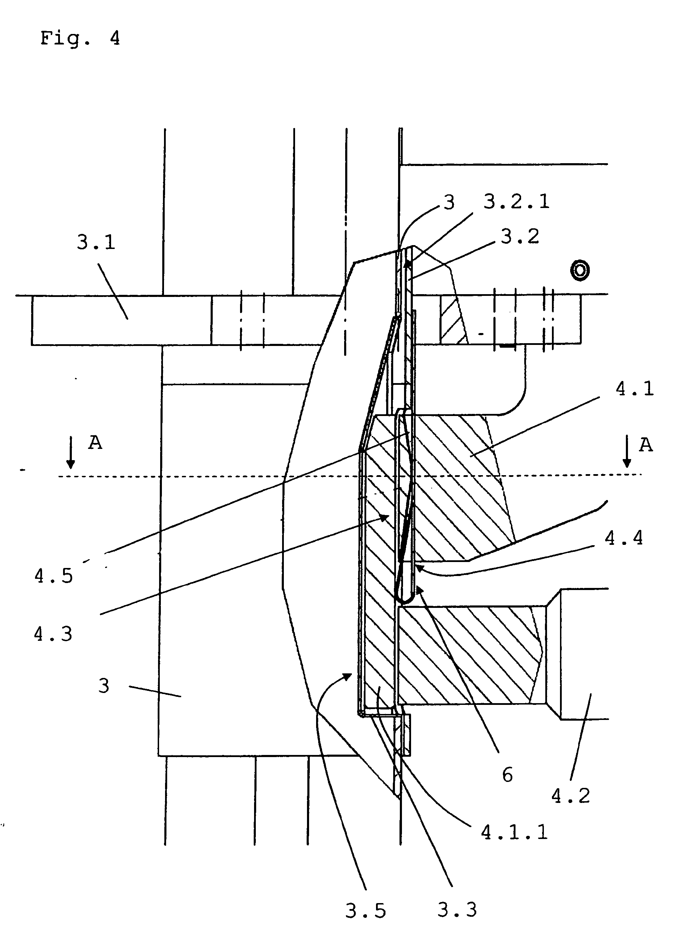

In der Fig. 2 und der Fig. 4 ist gezeigt, dass der äußere Führungsschlitz 4.4 im vertikalen Längsschnitt keine gerade Form hat, sondern eine zur Längssiegeleinrichtung 4 hin gewölbte Verengung 4.5 aufweist. In diesem äußeren Führungsschlitz 4.4 ist ein Federleitblech 6 eingebracht.

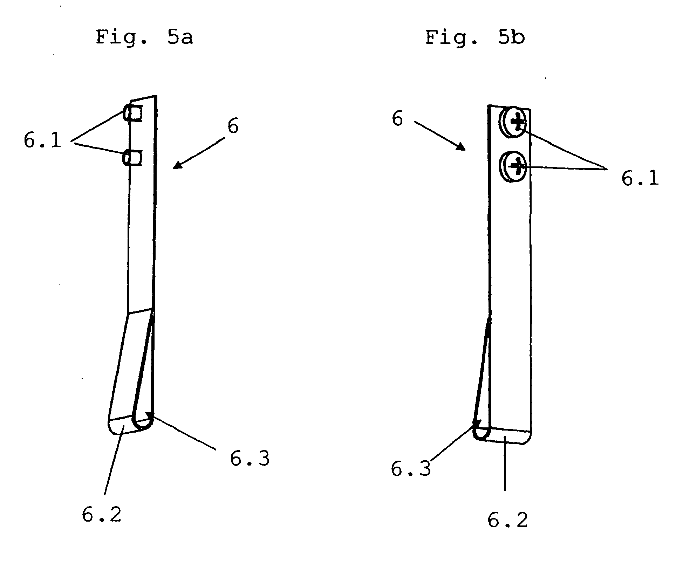

Fig. 5a zeigt das Federleitblech in einer seitlichen Ansicht und Fig. 5b in einer Vorderansicht. Das Federleitblech 6 ist aus einem länglich rechteckigen Blech ausgebildet, wobei ein unterer Teil eine Biegung 6.2 um 180° mit einem endlichen Biegeradius zeigt, so dass das untere Drittel des Federleitblechs 6 eine Schlaufe 6.3 bildet. Das Federleitblech 6 reicht der Länge nach von oberhalb der Öffnung 3.3 der Führungshülse 3.2 bis kurz vor den Siegelbereich der Sonotrode 4.2, wobei die erwähnte Schlaufe 6.3 des Federleitblechs 6 in Richtung der Sonotrode zeigt. Das Federleitblech 6 überragt somit die Länge des äußeren Führungsschlitzes 4.4 des Amboss 4.1 vertikal in beide Richtungen. Am oberen Ende des Federleitblechs 6 sind zwei Schrauben 6.1 vorgesehen, um das Federleitblech 6 an der Führungshülse 3.2 zu befestigen. Das Federleitblech 6 ist über die Schrauben 6.1 bündig an der Kante der Öffnung 3.3 der Führungshülse 3.2 unterhalb des Bügels 3.1 verschraubt.

Durch das Federleitblech werden die äußere Folienkante unmittelbar nach Austreten beider Kanten aus den Schlitzen 4.3, 4.4 gegen die innere Folienkante und damit beide gegen Amboss-Gegenteil 4.1.1 unmittelbar oberhalb der Sonotrode 4.2 gedrückt, so dass beide Kanten auf Höhe der Sonotrode 4.2 zwischen dieser und dem Gegenteil 4.1.1 direkt aufeinanderliegen und durch die Sonotrode über die genannte durchlaufende Länge sicher verschweißt werden.

Innerhalb des Formatrohres 3 ist eine innere Abdeckung 3.3 angeordnet, die den in das Formatrohr 3 hineinragenden Amboss 4.1 abdeckt (siehe Fig. 3). Die innere Abdeckung 3.4 ist im Wesentlichen rohrförmig ausgebildet, wobei die dem Amboss 4.1 zugewandte Seite eine im Querschnitt rechteckig ausgeformte Ausbuchtung 3.5 in Form des Gegenteils 4.1.1 des Ambosses 4.1 innerhalb des Formatrohres 3 aufweist. In der vertikalen Ausgestaltung (siehe Fig. 4) ist die Ausbuchtung 3.5 im oberen Bereich abgeschrägt, wobei die Schräge vom Formatrohr 3 bis zur Breite des Gegenteils 4.1.1 des Ambosses 4.1 reicht. Hiernach verläuft die Ausbuchtung 3.5 parallel zum Gegenteil 4.1.1 und schließt unterhalb dessen rechtwinklig ab. Die Länge der inneren Abdeckung 3.3 ist mindestens so bemessen, dass eine vollständige Bedeckung des Gegenteils 4.1.1 des Ambosses 4.1 im Inneren des Formatrohres 3 gegeben ist, so dass kein Füllgut an dem Amboss 4.1 hängenbleiben kann. Die innere Abdeckung 3.4 mit der Ausbuchtung 3.5 kann im Weiteren so ausgestaltet sein, dass seitlich des Ambosses 4.1 Platz für weitere Funktionalitäten vorgesehen ist, wie z.B. elektrische Zuführungen oder weitere Messeinrichtungen. Der US-Längssiegeleinrichtung 4 sind in ihrem unteren Bereich Blasdüsen (nicht dargestellt) zugeordnet, die zur Kühlung der Siegelnaht dienen.

Des Weiteren ist unterhalb der US-Längssiegeleinrichtung 4 eine Quersiegeleinrichtung 5 angeordnet (siehe Fig. 1). Diese ist auch als Ultraschallsiegeleinrichtung mit einem Amboss 5.1 und einer Sonotrode 5.2 ausgebildet. Weiterhin ist der Quersiegeleinrichtung 5 eine Steuerelektronik (nicht dargestellt) zugeordnet.

Die Schlauchbeutelmaschine 1 führt demnach die folgenden Schritte aus:
Eine Verpackungsfolie, wird von einer Folieneinheit 2.1, beispielsweise einer Folienrolle, abgezogen und über die Formschulter um das Formatrohr 3 geführt. Die um das Formatrohr 3 formangepasste Führungshülse 3.2 gewährleistet eine straff um das Formatrohr 3 gelegte Folie, wobei die Folie innerhalb des Zwischenraumes 3.2.1 zwischen Führungshülse 3.2 und Formatrohr 3 liegt. Die kantenseitigen Innenseiten der Folie werden im weiteren Verlauf durch die Führungsschlitze 4.3, 4.4 des Ambosses 4.1 in den Bereich der Längssiegeleinrichtung 4 geleitet, wobei eine erste Folienkante bündig mit dem Formatrohr 3 durch den inneren Führungsschlitz 4.3 geführt wird. Eine zweite Folienkante wird aus dem Zwischenraum 3.2.1 in den äußeren Führungsschlitz 4.4 geführt. Die zweite Folienkante wird indes zwischen Verengung 4.5 und das im äußeren Führungsschlitz 4.4 angeordnete Federleitblech 6 gezogen. Das im äußeren Führungsschlitz 4.4 angeordnete Federleitblech 6 drückt die zweite Folienkante an die dem Formatrohr 3 zugewandte Seite des Führungsschlitzes 4.4 und erzwingt somit eine feste Führung der zweiten Folienkante. Je nach Biegung der Schlaufe 6.3 des Federleitbleches 6 kann eine andere Federkraft auf die Folienkante aufgebracht werden.

Die Folienkanten werden folglich überlappend aufeinandergelegt und zu einer sogenannten lap-seal-Naht zusammengeführt. Das im äußeren Führungsschlitz 4.4 angeordnete Folienleitblech 6 vermeidet hierbei ein Auseinanderlaufen der Folienkanten. Mittels der Sonotrode 4.2 werden die Folienkanten zusammengesiegelt, wobei eine flache platzsparende Siegelnaht entsteht. Durch die Führungsschlitze 4.3, 4.4 des Ambosses 4.1 und des Federleitblechs 6 wird eine zuverlässige Bahnkantenführung gewährleistet. Mittels einer Vorschubeinrichtung wird der Folienschlauch nach weiter unten befördert und durch die Quersiegeleinrichtung mittels einer Quersiegelnaht zu einem Beutel verschlossen.

Im weiteren Verlauf wird der so erzeugte Schlauchbeutel mittels des durch das Formatrohr fallenden Füllgutes, vorzugsweise Lebensmittel, wie Salat oder Reibekäse o.ä. befüllt, wobei die innere Abdeckung 3.4 den Amboss 4.1 vor herab fallendem Füllgut schützt. In einem weiteren Schritt wird der gefüllte Schlauchbeutel weiter nach unten befördert und am oben offenen Ende durch eine zweite Quersiegelnaht durch die Quersiegeleinrichtung versiegelt, so dass die Schlauchbeutelverpackung fertig gestellt ist.

### Bezugszeichenliste

- 1: Schlauchbeutelmaschine
- 2: Abzugseinrichtung
- 2.1: Folieneinheit
- 3: Formatrohr
- 3.1: Bügel
- 3.2: Führungshülse
- 3.2.1: Zwischenraum
- 3.3: Öffnung
- 3.4: innere Abdeckung
- 3.5: Ausbuchtung
- 4: US-Längssiegeleinrichtung
- 4.1: Amboss
- 4.1.1: Gegenteil
- 4.2: Sonotrode
- 4.3: erster, innerer Führungsschlitz
- 4.4: zweiter, äußerer Führungsschlitz
- 4.5: Verengung
- 5: US-Quersiegeleinrichtung
- 5.1: Amboss
- 5.2: Sonotrode
- 6: Federleitblech
- 6.1: Schrauben
- 6.2: Biegung
- 6.3: Schlaufe

## Patentansprüche

1. Schlauchbeutelmaschine mit einer Abzugsvorrichtung (2) für das Verpackungsmaterial, mit einem Formatrohr (3) zum Formen und Befüllen von Schlauchbeuteln, mit einer Längssiegeleinrichtung (4) mit einem Amboss (4.1) und einer Sonotrode (4.2) und mit einer Quersiegeleinrichtung, wobei die Längssiegeleinrichtung (4) als eine in das Formatrohr (3) integrierte Ultraschall-Längssiegeleinrichtung (4) ausgebildet ist, um eine erste und zweite Längskante des Verpackungsmaterials miteinander zu einer sich überlappenden Siegelnaht zu siegeln, **dadurch gekennzeichnet,**
- **dass** der Amboss mindestens zwei vertikale Führungsabschnitte in Form von Führungsschlitzen aufweist, durch welche die Kanten des Verpackungsmaterials geführt sind,
- **dass** die Ultraschall-Längssiegeleinrichtung (4) ein Federleitblech (6) zur Führung mindestens einer Kante des Verpackungsmaterials aufweist,
**dass** das Federleitblech (6) beide zu verbindende Längskanten des zu
bildenden Schlauches unmittelbar oberhalb der Sonotrode (4.7), zu einer sicheren Verschweißung der beiden Längskanten durch die Sonotrode (4.2),
gegen ein gegenüberliegendes Gegenteil (4.1.1) des Sonotrodenambosses (4.1) drückt.

2. Schlauchbeutelmaschine nach Anspruch 1, **dadurch gekennzeichnet, dass** die Ultraschall-Längssiegeleinrichtung (4) an einem Bügel (3.1) am Formatrohr (3) gehalten ist.

3. Schlauchbeutelmaschine nach Anspruch 1 oder 2, **dadurch gekennzeichnet, dass** das Formatrohr (3) eine längliche rechteckige Öffnung aufweist, in welcher der Amboss (4.1) integriert ist.

4. Schlauchbeutelmaschine nach einem der vorangehenden Ansprüche, **dadurch gekennzeichnet, dass** ein erster, insbesondere innerer Führungsschlitz (4.3) des Ambosses (4.1) mit einem Schlitz zwischen Sonotrode (4.2) und ein Gegenteil (4.1.1) des Ambosses (4.1) zur Sonotrode (4.2), insbesondere fluchtend mit dem äußeren Rand des Formatrohres (3) ausgebildet ist, zur Führung einer ersten Kante des Verpackungsmaterials.

5. Schlauchbeutelmaschine nach Anspruch 3 oder 4, **dadurch gekennzeichnet, dass** das Federleitblech (6) die zweite Folienkante von einem zweiten Führungsschlitz (4.4) in die Ebene des ersten Führungsschlitzes (4.3) auf die erste Kante führt.

6. Schlauchbeutelmaschine nach einem der vorangehenden Ansprüche, **dadurch gekennzeichnet, dass** ein zweiter, äußerer Führungsschlitz (4.4) des Ambosses (4.1) eine in den Führungsabschnitt gewölbte Ausbuchtung (3.5) aufweist, zur Führung einer zweiten Kante des Verpackungsmaterials.

7. Schlauchbeutelmaschine nach einem der vorangehenden Ansprüche, **dadurch gekennzeichnet, dass** das Federleitblech (6) aus einem länglich rechteckigen Blech ausgebildet ist, wobei ein unteres Drittel zu einer Schlaufe (6.3) gebogen ist.

8. Schlauchbeutelmaschine nach einem der vorangehenden Ansprüche, **dadurch gekennzeichnet, dass** das Formatrohr (3) unterhalb des Bügels (3.1) und oberhalb der Ultraschall-Längssiegeleinrichtung (4) eine umlaufende Führungshülse (3.2) zur Führung des Verpackungsmaterial aufweist.

9. Schlauchbeulmaschine nach Anspruch 8, **dadurch gekennzeichnet, dass** sich die Führungshülse (3.2) unmittelbar unterhalb das Formatrohr (3) umgebenden Bügel (4.1) nach unten bis mindestens in den Bereich der Sonotrode (4.2) erstreckt.

10. Schlauchbeutelmaschine nach einem der vorangehenden Ansprüche, **dadurch gekennzeichnet, dass** das Federleitblech (6) von einer Öffnung (3.3) der Führungshülse (3.2) bis vor die Sonotrode (4.2) ausgebildet ist.

11. Schlauchbeutelmaschine nach einem der vorangehenden Ansprüche, **dadurch gekennzeichnet, dass** das Formatrohr (3) eine innere Abdeckung (3.4) aufweist, die den Amboss (4.1) überdeckt.

12. Schlauchbeutelmaschine nach Anspruch 11, **dadurch gekennzeichnet, dass** die innere Abdeckung (3.4) im Wesentlichen rohrförmig ausgebildet ist, wobei eine Seite eine nach innen rechteckig ausgeformte Ausbuchtung (3.5) zum Schutz des Ambosses (4.1) aufweist.

## Claims

1. A tubular bag making machine with a pull-off device (2) for the packaging material, with a forming tube (3) for forming and filling tubular bags, with a longitudinal sealing device (4) with an anvil (4.1) and a sonotrode (4.2) and with a transverse sealing device, wherein the longitudinal sealing (4) is designed as a ultrasonic longitudinal sealing device integrated in the forming tube (3) in order to seal the first and second longitudinal edge of the packaging material into an overlapping sealing seam, **characterised in that**
- the anvil has at least two vertical guide sections in the form of guide slots through which the edges of the packaging material are guided,
- the ultrasonic longitudinal sealing device (4) has a spring-loaded guide plate (6) for guiding at least one edge of the packaging material,
- the spring-loaded guide plate (6) pushes both longitudinal edges to be connected of the tube to be formed immediately above the sonotrode (4.7) against an opposite counter-part (4.1.1) of the sonotrode anvil (4.1) for secure sealing of the two longitudinal edges by the sonotrode (4.2) .

2. The tubular bag making machine according to Claim 1, **characterised in that** the ultrasonic longitudinal sealing device (4) is retained on a strap (3.1) on the forming tube (2).

3. The tubular bag making machine according to Claim 1 or 2, **characterised in that** the forming tube (3) has an oblong rectangular opening in which the anvil (4.1) is integrated.

4. The tubular bag making machine according to any one of the preceding claims, **characterised in that** a first, in particular inner guide slot (4.3) of the anvil (4.1) is designed with a slot between the sonotrode (4.2) and a counter-part (4.1.1) of the anvil (4.1) for the sonotrode (4.2), in particular flush with the outer edge of the forming tube (3), for guiding a first edge of the packaging material.

5. The tubular bag making machine according to Claim 3 or 4, **characterised in that** the spring-loaded guide plate (6) guides the second film edge from a second guide slot (4.4) into the plane of the first guide slot (4.3) onto the first edge.

6. The tubular bag making machine according to any one of the preceding claims, **characterised in that** a second, outer guide slot (4.4) of the anvil (4.1) has a bulge (3.5) arching into the guide section for guiding a second edge of the packaging material.

7. The tubular bag making machine according to any one of the preceding claims, **characterised in that** the spring-loaded guide plate (6) is formed from an oblong, rectangular plate, wherein a lower third is bent to form a loop (6.3).

8. The tubular bag making machine according to any one of the preceding claims, **characterised in that** the forming tube (3) has, below the strap (3.1) and above the ultrasonic longitudinal sealing device(4), a peripheral guide sleeve (3.2) for guiding the packaging material.

9. The tubular bag making machine according to Claim 8, **characterised in that** the guide sleeve (32) extends downwards at least into the region of the sonotrode (4.2) immediately underneath the strap (4.1) surrounding the forming tube (3).

10. The tubular bag making machine according to any one of the preceding claims, **characterised in that** the spring-loaded guide plate (6) is formed from an opening (3.3) of the guide sleeve (3.2) up to a point in front of the sonotrode (4.2).

11. The tubular bag making machine according to any of the preceding claims, **characterised in that** the forming tube (3) has an inner cover (3.4) which covers the anvil (4.1).

12. The tubular bag making machine according to Claim 11, **characterised in that** the inner cover (3.4) is of an essentially tubular design, and one side has a bulge (3.5) arching rectangularly inwardly for protecting the anvil (4.1).

## Revendications

1. Ensacheuse avec un dispositif d'extraction (2) de la matière de conditionnement, un tube de formation (3) pour former et remplir des sacs tubulaires, une installation de scellement longitudinal (4) équipée d'une enclume (4.1) et d'une sonotrode (4.2) et une installation de scellement longitudinal, l'installation de scellement longitudinal (4) prenant la forme d'une installation de scellement longitudinal par ultrasons (4) intégrée dans le tube de formation (3), pour sceller un premier et un deuxième bord longitudinal de la matière de conditionnement entre eux en vue de former un joint scellé par chevauchement, **caractérisée en ce que** :
- l'enclume comporte au moins deux sections de guidage verticales prenant la forme de fentes de guidage à travers lesquelles les bords de la matière de conditionnement sont guidés ;
- l'installation de scellement longitudinal par ultrasons (4) comporte une tôle conductrice sur ressort (6) conçue pour guider au moins un bord de la matière de conditionnement ;
- la tôle conductrice sur ressort (6) appuie les deux bords longitudinaux à relier du tube flexible à former directement au-dessus de la sonotrode (4.7), en vue de réaliser une soudure sûre des deux bords longitudinaux par le biais de la sonotrode (4.2), contre une contrepartie (4.1.1) opposée de l'enclume de sonotrode (4.1).

2. Ensacheuse selon la revendication 1, **caractérisée en ce que** l'installation de scellement longitudinal par ultrasons (4) est maintenue contre un étrier (3.1) placé au niveau du tube de formation (3).

3. Ensacheuse selon la revendication 1 ou 2, **caractérisée en ce que** le tube de formation (3) comporte une ouverture rectangulaire oblongue dans laquelle l'enclume (4.1) est intégrée.

4. Ensacheuse selon l'une quelconque des revendications précédentes, **caractérisée en ce qu'**une première fente de guidage (4.3) de l'enclume (4.1), notamment une fente inférieure, est pourvue d'une fente entre la sonotrode (4.2) et une contrepartie (4.1.1) de l'enclume (4.1) par rapport à la sonotrode (4.2), notamment de façon alignée avec la bordure extérieure du tube de formation (3), pour guider un premier bord de la matière de conditionnement.

5. Ensacheuse selon la revendication 3 ou 4, **caractérisée en ce que** la tôle conductrice sur ressort (6) guide le deuxième bord de film d'une deuxième fente de guidage (4.4) placée dans le plan de la première fente de guidage (4.3) sur le premier bord.

6. Ensacheuse selon l'une quelconque des revendications précédentes, **caractérisée en ce qu'**une deuxième fente de guidage (4.4) extérieure de l'enclume (4.1) comporte un bombement (3.5) bombé dans la section de guidage pour guider un deuxième bord de la matière de conditionnement.

7. Ensacheuse selon l'une quelconque des revendications précédentes, **caractérisée en ce que** la tôle conductrice sur ressort (6) est réalisée à partir d'une tôle rectangulaire oblongue, un tiers inférieur étant courbé pour former une boucle (6.3).

8. Ensacheuse selon l'une quelconque des revendications précédentes, **caractérisée en ce que** le tube de formation (3) comporte un fourreau de guidage (3.2) périphérique pour guider la matière de conditionnement sous l'étrier (3.1) et sur l'installation de scellement longitudinal par ultrasons (4).

9. Ensacheuse selon la revendication 8, **caractérisée en ce que** le fourreau de guidage (3.2) s'étend directement vers le bas sous l'étrier (4.1) entourant le tube de formation (3), au moins jusque dans la région de la sonotrode (4.2).

10. Ensacheuse selon l'une quelconque des revendications précédentes, **caractérisée en ce que** la tôle conductrice sur ressort (6) est réalisée d'une ouverture (3.3) du fourreau de guidage (3.2) jusque devant la sonotrode (4.2).

11. Ensacheuse selon l'une quelconque des revendications précédentes, **caractérisée en ce que** le tube de formation (3) comporte un cache intérieur (3.4) recouvrant l'enclume (4.1).

12. Ensacheuse selon la revendication 11, **caractérisée en ce que** le cache intérieur (3.4) est réalisé pour l'essentiel en forme de tube, un côté comportant un bombement (3.5) en forme de rectangulaire formé vers l'intérieur pour protéger l'enclume (4.1).
